# EUROPÄISCHE PATENTSCHRIFT

(11) **EP 1 391 755 B1**
(45) Veröffentlichungstag und Bekanntmachung des Hinweises auf die Patenterteilung: **19.04.2006**
(21) Anmeldenummer: 03102456.5
(22) Anmeldetag: 07.08.2003
(51) Int. Cl.: G02B 6/00, B60R 1/12, B60Q 1/26, B60Q 1/34

(54) **Fahrzeugleuchte**
Vehicle lamp
Feu de véhicule

(30) Priorität: 21.08.2002 DE 10238073
(43) Veröffentlichungstag der Anmeldung: 25.02.2004
(73) Patentinhaber: Hella KGaA Hueck & Co., 59552 Lippstadt (DE)
(72) Erfinder: Köneke, Josef, 33142, Büren (DE); Bungenstock, Carmen, 33165, Kleinenberg (DE)

(56) Entgegenhaltungen:
- EP-A- 1 195 296
- WO-A-01/44013
- WO-A-02/08015

## Beschreibung

Die Erfindung betrifft eine Fahrzeugleuchte, insbesondere Seitenblinkleuchte zum Einbau in das Gehäuse eines Außenrückspiegels, mit einem Leuchtengehäuse, zumindest einem in dem Leuchtengehäuse angeordneten Lichtleiter, der sich von der Außenkante des Gehäuses des Außenrückspiegels im wesentlichen horizontal zum Fahrzeug hin erstreckt, und der das an ei ner zum Fahrzeug hinweisenden Stirnseite in ihn von zumindest einer Lichtquelle eingekoppelte Licht zu seiner gegenüberliegenden Stirnseite leitet und dort gemäß der gesetzlich geforderten Lichtverteilung im wesentlichen entgegen und quer zur Fahrtrichtung des Fahrzeugs auskoppelt und mit zumindest einer zweiten Lichtquelle, der zumindest ein optisches Bauelement zugeordnet ist, das im wesentlichen der Kontur des Lichtleiters folgend in dem Leuchtengehäuse angeordnet ist.

Eine derartige Fahrzeugleuchte ist aus der EP-A-1 195 296 oder DE 200 17 038 U1 bekannt. Bei der bekannten Fahrzeugleuchte ist der Lichtleiter stabförmig ausgebildet in dem Leuchtengehäuse angeordnet, wobei zur Erhöhung der Sichtbarkeit zwei ei n-zelne Lichtleiter vorgesehen sind. Zwischen den stabförmigen Lichtleitern ist eine Gruppe Lichtquellen in Form von LEDs angeordnet, denen in ihrer Hauptabstrahlrichtung eine lichtbündelnde Sammellinse vorgelagert ist. Die LEDs erfüllen in Verbindung mit der Sammellinse den Zweck, im eingeschalteten Zustand die leuchtende Fläche der Seitenblinkleuchte zu vergrößern. Nachteilig an einer derart bekannten Fahrzeugleuchte ist es, dass bedingt durch die Verteilung der Lichtquellen entlang der Lichtleiter und die ihnen vorgelagerte Sammellinse der für die Lichtfunktion nutzbare Ausschnitt des Spiegelgehäuses im eingeschalteten Zustand nicht homogen ausgeleuchtet wird, was aus Gründen des Designs des Außenrückspiegels nicht wünschenswert ist. Insbesondere die Bereiche der Sammellinse hinter denen jeweils eine LED angeordnet ist, erscheinen im eingeschalteten Zustand als helle Lichtflecke. Weiterhin erscheint die langgestreckte Sammellinse im eingeschalteten Zustand als schmaler, mit wechselnder Intensität leuchtender Streifen, dem ober- und unterhalb weniger hell leuchtende Streifen zugeordnet sind. Ein weiterer Nachteil der bekannten Fahrzeugleuchte ist es, dass die Gruppe von Lichtquellen im wesentlichen in Fahrtrichtung direkt hinter der Sammellinse angeordnet ist, so dass das Leuchtengehäuse sehr tiefbauend in Gehäuse des Außenrückspiegels eingebaut ist. Eine derartige Anordnung der Gruppe von Lichtquellen hat den weiteren Nachteil, dass eine Vielzahl von einzelnen Lichtquellen benötigt werden, die auf einem nicht ebenen Lichtquellenträger oder einzeln kontaktiert werden müssen, was einen erheblichen Kosten- und Montageaufwand bedeutet.

Aufgabe der Erfindung ist es, eine Fahrzeugleuchte, insbesondere eine Seitenblinkleuchte zum Einbau in das Gehäuse eine Außenrückspiegels gemäß des Oberbegriffs des Anspruchs 1 zu schaffen, die im eingeschalteten Zustand den für die Lichtfunktion nutzbaren Ausschnitt des Spiegelgehäuses homogen ausleuchtet, die über möglichst wenig Lichtquellen verfügt und die einfach und kostengünstig montierbar ist.

Diese Aufgabe wird erfindungsgemäß dadurch gelöst, dass das optische Bauelement als zweiter Lichtleiter ausgebildet ist, der im wesentlichen hinter dem ersten Lichtleiter angeordnet ist und der das in ihn von der zumindest einen zweiten Lichtquelle an einer zum Fahrzeug hinweisenden Stirnseite eingekoppelte Licht mittels Auskoppelelementen im wesentlichen quer zu seiner Längserstreckung auskoppelt, wobei das aus dem zweiten Lichtleiter ausgekoppelte Licht den ersten Lichtleiter durchstrahlt.

Ein derartiger Aufbau leuchtet im eingeschalteten Zustand aufgabengemäß den für die Lichtfunktion nutzbaren Ausschnitt des Spiegelgehäuses homogen aus, weil der zweite Lichtleiter das in ihn eingekoppelte Licht homogen über seine gesamte Fläche auskoppelt und das aus ihn ausgekoppelte Licht den ersten Lichtleiter durchstrahlt, so dass die Fahrzeugleuchte im wesentlichen keine Unterschiede in der abgestrahlten Lichtintensität aufweist. Weiterhin ist es vorteilhaft, dass für die beiden Lichtleiter nur ein Minimum an Lichtquellen benötigt werden, die einfach und kostengünstig vor den Einkoppelbereichen der Lichtleiter kontaktierbar sind.

Bei einer vorteilhaften Ausführungsform der Erfindung ist vorgesehen, dass die Auskoppelelemente auf die dem ersten Lichtleiter entgegengesetzte Mantelfläche des zweiten Lichtleiters aufgebrachte Reflexionselemente sind. Ein derartiger Aufbau ermöglicht eine große Designfreiheit bei der Gestaltung der Auskoppelelemente, wobei insbesondere als Auskoppelelemente aufgebrachte Lacke der Fahrzeugleuchte im ausgeschalteten Zustand ein optisch ansprechendes Aussehen verleihen.

Eine andere vorteilhafte Ausführungsform der Erfindung sieht vor, dass die Auskoppelelemente in die dem ersten Lichtleiter entgegengesetzte Mantelfläche des zweiten Lichtleiters eingebrachte Prismen sind. Durch einen derartigen Aufbau lassen sich die Auskoppelelemente einfach und kostengünstig herstellen, da sie beim Spritzen des Lichtleiters gleich mit geformt werden und somit kein weiterer Arbeitsschritt notwendig ist, um bei dem zweiten Lichtleiter die Auskoppelelemente zu bilden.

Die Fahrzeugleuchte weist sowohl im ausgeschalteten als auch im eingeschalteten Zustand ein ansprechendes Design auf, wenn die Auskoppelelemente vorteilhaft punktförmig oder linienförmig ausgebildet sind.

Um die Herstellung des zweiten Lichtleiters noch weiter zu vereinfachen und ihm ein ansprechendes Design zu geben, sind bei einer vorteilhaften Ausgestaltung der Erfindung die Auskoppelelemente in dem Material des zweiten Lichtleiters enthaltene Streuelemente.

Bei einer vorteilhaften Ausführungsform der Erfindung ist vorgesehen, dass die der Mantelfläche des zweiten Lichtleiters zugewandte Gehäusewandung des Leuchtengehäuses verspiegelt ausgebildet ist, so dass bedingt durch Fertigungstoleranzen unbeabsichtigt entgegen der gewünschten Auskoppelrichtung des zweiten Lichtleiters aus diesem ausgekoppeltes Licht durch die verspiegelte Gehäusewandung in Richtung der Lichtleiter reflektiert wird und auch entsprechend der gewünschten Lichtverteilung den ersten Lichtleiter durchstrahlt. Weiterhin erhält die Fahrzeugleuchte durch die verspiegelte Gehäusewandung ein optisch ansprechendes Design.

Um den Aufbau und die Herstellung des ersten Lichtleiters zu vereinfachen und die in den Lichtleiter einzukoppelnden Lichtstrahlen zu parallelisieren, weist der Lichteinkoppelbereich des ersten Lichtleiters ein optisches Element auf, so das die Lichtstrahlen der zumindest einen ersten Lichtquelle derart in den ersten Lichtleiter einkoppeln, dass diese in einem ersten Bereich des ersten Lichtleiters vornehmlich nur auf eine Mantelfläche des Lichtleiters auftreffen und diese dadurch derart zu dem Auskoppelbereich des ersten Lichtleiters geleitet werden, dass sie direkt gemäß der gesetzlichen geforderten Lichtverteilung auskoppeln. Das optische Element kann als zusätzliches Bauteil zwischen der ersten Lichtquelle und dem ersten Lichtleiter angeordnet sein, vorteilhaft ist das optische Element jedoch einstückig mit dem ersten Lichtleiter ausgebildet, Zweckmäßigerweise ist das optische Element eine Fresnel-Linse, die nur wenig Bauraum benötigt, mit der jedoch die Lichtstrahlen sehr genau in gewünschte Richtung umlenkbar sind. Ein derartiger Aufbau bietet den Vorteil, dass die Lichtstrahlen im wesentlichen ohne Verluste mittels Totalreflektion durch den ersten Lichtleiter zu dem Auskoppelbereich geleitet werden, dass sie dort bedingt durch Gestaltung des Auskoppelbereiches nicht mehr an den Wandungen des Lichtleiters reflektieren sondern gemäß der gesetzlich geforderten Lichtverteilung aus dem Lichtleiter auskoppeln.

Der Aufbau und die Montage der Fahrzeugleuchte wird aufgabengemäß dadurch vereinfacht, dass die zumindest eine dem ersten Lichtleiter zugeordnete Lichtquelle und die zumindest eine dem zweiten Lichtleiter zugeordnete Lichtquelle auf einem gemeinsamen Lichtquellenträger in dem Leuchtengehäuse angeordnet sind. Somit können die Lichtquellen auf einfache Weise elektrisch und mechanisch kontaktiert und gemeinsam in das Leuchtengehäuse montiert werden.

Um die Fahrzeugleuchte für mehr als nur eine Blinklichtfunktion zu nutzen geben bei einer vorteilhaften Ausführungsform der Erfindung die zumindest eine erste Lichtquelle und die zumindest eine zweite Lichtquelle Licht mit einer unterschiedlichen Farbgebung ab und sind einzeln elektrisch ansteuerbar. Somit ist es möglich, dass in den ersten Lichtleiter Licht mit einer gelben Farbgebung eingekoppelt wird und er die gesetzlich vorgeschriebene Lichtverteilung einer Blinklichtfunktion im Fahrzeugaußenspiegel erfüllt und in den zweiten Lichtleiter Licht mit einer weißen Farbgebung eingekoppelt wird und er die Lichtfunktion eines Begrenzungslichtes erfüllt. Weiterhin ist es möglich, dass dem zweiten Lichtleiter zumindest zwei Lichtquellen mit jeweils unterschiedlicher Farbgebung zugeordnet sind, so dass er je nachdem welche Lichtquelle elektrisch angesteuert wird, entweder bei einer Lichtquelle die Licht mit einer weißen Farbgebung abgibt die beschriebene Lichtfunktion des Begrenzungslichtes oder bei einer Lichtquelle die Licht mit einer gelben Farbgebung abgibt die beschriebene homogene Ausleuchtung des Blinklichtfeldes erfüllt.

Um den Aufbau der Fahrzeugleuchte möglichst klein zu gestalten, ist die zumindest eine erste Lichtquelle und/oder die zumindest eine zweite Lichtquelle als LED ausgebildet.

Ein vorteilhaftes Ausführungsbeispiel der Erfindung ist anhand der Figuren näher erläutert. Es zeigen:
- Figur 1:: eine perspektivische Ansicht eines Fahrzeugaußenspiegels,
- Figur 2:: die geschnittene Draufsicht gemäß der Linie X-X aus Figur 1,
- Figur 3:: die geschnittene Draufsicht gemäß der Linie X-X aus Figur 1,
- Figur 4:: die vergrößerte Detailansicht Y aus Figur 2 und
- Figur 5:: die vergrößerte Detailansicht Z aus Figur 2.

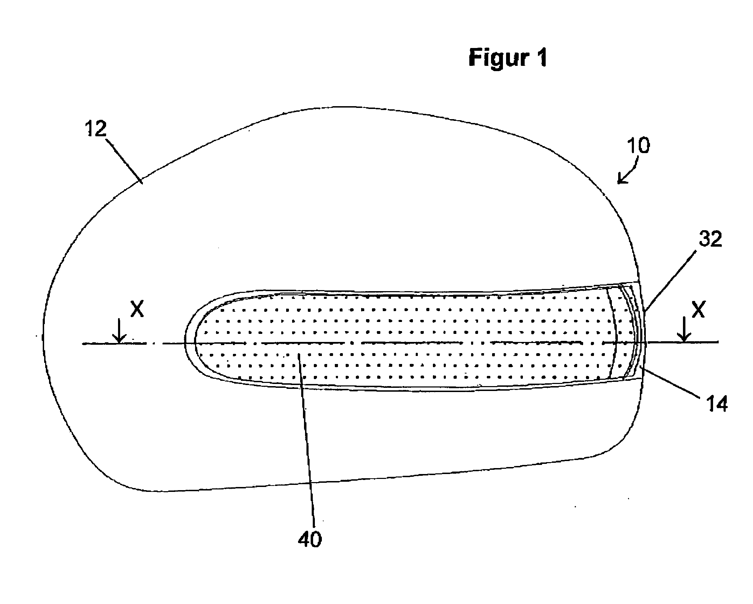

Figur 1 zeigt einen aus der Fahrtrichtung des Fahrzeugs gesehen linken Außenrückspiegel (10) eines Kraftfahrzeuges mit einem Gehäuse (12) und einer in einem Gehäuseausschnitt (14) angeordneten Fahrzeugleuchte, die eine Seitenblinkleuchte ist. Der für die Lichtfunktion nutzbare Gehäuseausschnitt (14) erstreckt sich von der Außenkante (32) des Außenrückspiegels (10) im wesentlichen horizontal zum nicht dargestellten Fahrzeug hin. Das Design der Fahrzeugleuchte wird durch die Anordnung der Auskoppelelemente (40) des in dieser Ansicht nicht erkennbaren zweiten Lichtleiters geprägt.

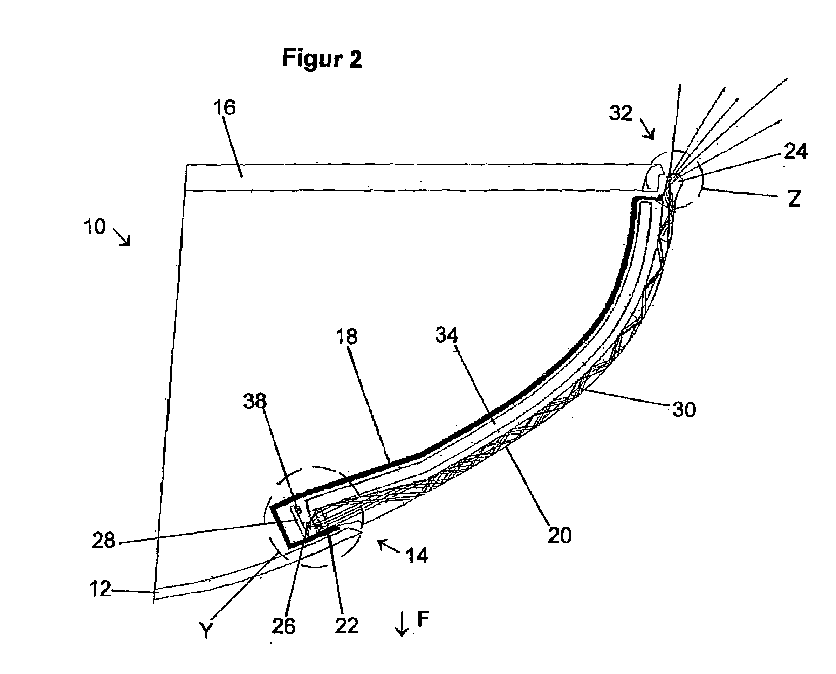

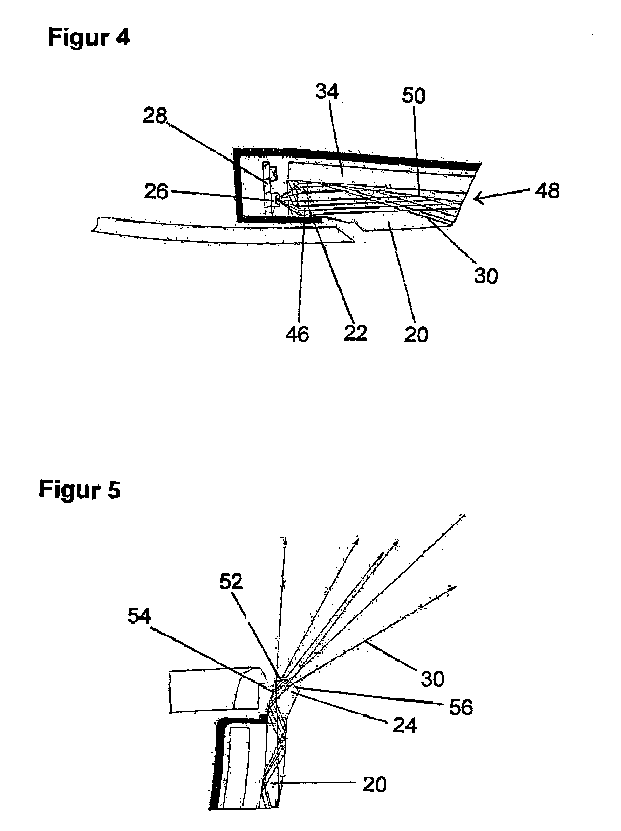

Figur 2 zeigt die geschnittene Draufsicht gemäß der Linie X-X aus Figur 1, wobei hier die Funktion des ersten Lichtleiters (20) verdeutlicht wird. Das Gehäuse (12) des Außenrückspiegels (10) wird entgegen der Fahrtrichtung (F) durch ein Spiegelglas (16) verschlossen. In einen Gehäuseausschnitt (14) ist eine Fahrzeugleuchte eingesetzt, die sich im wesentlichen horizontal von der Außenkante (32) zum nicht dargestellten Fahrzeug hin erstreckt. Die Fahrzeugleuchte besteht aus einem Leuchtengehäuse (18) in das ein erster Lichtleiter (20) und zweiter Lichtleiter (34) eingesetzt sind. Der zweite Lichtleiter (34) ist entgegen der Fahrtrichtung (F) gesehen nahezu äquidistant hinter dem ersten Lichtleiter (20) angeordnet. Auf einem in dem Leuchtengehäuse (18) angeordneten Lichtquellenträger (28) sind zwei Lichtquellen (26, 38) kontaktiert, wobei die eine Lichtquelle (26) dem ersten Lichtleiter (20) und die andere Lichtquelle (38) dem zweiten Lichtleiter (34) zugeordnet ist. Das von der Lichtquelle (26) abgestrahlte Licht wird durch einen mit einem optischen Element versehenen Lichteinkoppelbereich (22) in den ersten Lichtleiter (20) eingekoppelt und in diesem durch Totalreflexion zu dem Lichtauskoppelbereich (24) geleitet. Zur Verdeutlichung sind in Figur 2 eine kleine Anzahl von Lichtstrahlen (30) in den ersten Lichtleiter (20) eingezeichnet. Im Lichtauskoppelbereich (24) wird durch die ausgekoppelten Lichtstrahlen (30) der gesetzlich geforderte Bereich der Lichtverteilung für die Blinklichtfunktion ausgeleuchtet. Auf die Ausbildung des Lichteinkoppelbereiches (22) des ersten Lichtleiters (20) wird in der Beschreibung zu Figur 4 und auf die Ausbildung des Lichtauskoppelbereiches (24) des ersten Lichtleiters (20) wird in der Figurenbeschreibung zu Figur 5 noch näher eingegangen.

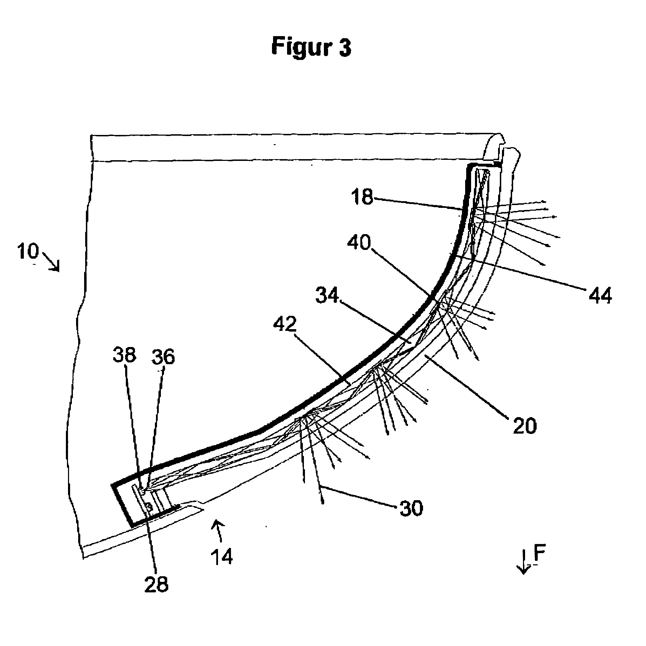

Figur 3 zeigt ebenfalls die geschnittene Draufsicht gemäß der Linie X-X aus Figur 1, wobei hier die Funktion des zweiten Lichtleiters (34) verdeutlicht wird. Das von der auf dem Lichtquellenträger (28) kontaktierten Lichtquelle (38) abgestrahlte Licht koppelt an der zum nicht dargestellten Fahrzeug hinweisenden Stirnseite (36) in den zweiten Lichtleiter (34) ein und wird mittels Totalreflexion durch diesen geleitet. Auf die dem ersten Lichtleiter (20) entgegengesetzten Mantelfläche (42) des zweiten Lichtleiters (34) sind Auskoppelelemente (40) in Form von Lackpunkten aufgebracht. An diesen Auskoppelelementen (40) wird die Totalreflexion unterbrochen und die durch den zweiten Lichtleiter (34) geleiteten Lichtstrahlen (30) werden entgegen der Mantelfläche (42) ausgekoppelt. Die ausgekoppelten Lichtstrahlen (30) durchstrahlen den ersten Lichtleiter (20) ohne durch diesen noch wesentlich optisch beeinflusst zu werden. Durch die Durchleuchtung des ersten Lichtleiters (20) wird der für die Lichtfunktion nutzbare Gehäuseausschnitt (14) des Außenrückspiegels (10) homogen ausgeleuchtet. Die der Mantelfläche (42) zugewandte Gehäusewandung (44) des Leuchtengehäuses (18) ist verspiegelt ausgebildet, wodurch der zweite Lichtleiter (34) im ausgeschalteten Zustand schwebend erscheint und die Fahrzeugleuchte ein optisch ansprechendes Design erhält.

In Figur 4 wird die spezielle Ausgestaltung des Lichteinkoppelbereiches (22) in einer vergrößerten Detailansicht gemäß des Ausschnittes Y aus Figur 2 verdeutlicht. Das von der auf dem Lichtquellenträger (28) kontaktierten Lichtquelle (26) abgestrahlte Licht trifft auf eine dem Lichteinkoppelbereich (22) des ersten Lichtleiters (20) zugeordnete Fresnel-Linse (46), die das Licht derart beeinflusst, dass die Lichtstrahlen (30) in einem ersten Bereich (48) des ersten Lichtleiters (20) im wesentlichen nur auf die dem zweiten Lichtleiter (34) zugewandte Mantelfläche (50) des ersten Lichtleiters (20) trifft und von dort mittels Totalreflexion weitergeleitet wird. Eine derartige Beeinflussung der Lichtstrahlen (30) bei der Lichteinkopplung in den ersten Lichtleiter (20) ermöglicht es, dass die Lichtstrahlen (30) im Lichtauskoppelbereich des Lichtleiters gemäß der gesetzlich vorgeschriebenen Lichtverteilung auskoppeln.

In Figur 5 wird eine vergrößerte Detailansicht des Lichtauskoppelbereiches (24) gemäß des Ausschnittes Z aus Figur 2 verdeutlicht. Die durch die entsprechende optische Beeinflussung im Lichteinkoppelbereich durch den ersten Lichtleiter (20) geleiteten Lichtstrahlen (30) koppeln an seinem Ende gemäß der gesetzlich vorgeschriebenen Lichtverteilung im wesentlichen entgegen und quer zur Fahrtrichtung des Fahrzeugs aus. Ein Teil der durch den ersten Lichtleiter (20) geleiteten Lichtstrahlen (30) tritt direkt durch eine erste Fläche (56) des Lichtauskoppelbereiches (24) aus dem Lichtleiter aus und erfüllt so einen ersten Teilbereich der gesetzlich vorgeschriebenen Lichtverteilung. Der andere Teil der durch den ersten Lichtleiter (20) geleiteten Lichtstrahlen (30) trifft auf eine Endreflektionsfläche (54) des ersten Lichtleiters (20) auf und wird zu einer zweiten Fläche (52) des Lichtauskoppelbereiches (24) reflektiert und tritt dort so aus dem ersten Lichtleiter (20) aus, dass der andere Teilbereich der gesetzlich vorgeschriebenen Lichtverteilung erfüllt wird.

### Bezugszeichenliste:

- 10: Außenrückspiegel
- 12: Gehäuse
- 14: Gehäuseausschnitt
- 16: Spiegelglas
- 18: Leuchtengehäuse
- 20: erster Lichtleiter
- 22: Lichteinkoppelbereich
- 24: Lichtauskoppelbereich
- 26: Lichtquelle
- 28: Lichtquellenträger
- 30: Lichtstrahlen
- 32: Außenkante
- 34: zweiter Lichtleiter
- 36: Stirnseite
- 38: Lichtquelle
- 40: Auskoppelelemente
- 42: Mantelfläche
- 44: Gehäusewandung
- 46: Fresnel-Linse
- 48: erster Bereich
- 50: Mantelfläche
- 52: erste Fläche
- 54: Endreflektionsfläche
- 56: zweite Fläche
- F: Fahrtrichtung

## Patentansprüche

1. Fahrzeugleuchte, insbesondere Seitenblinkleuchte zum Einbau in das Gehäuse (12) eines Außenrückspiegels (10), mit einem Leuchtengehäuse (18), zumindest einem in dem Leuchtengehäuse (18) angeordneten Lichtleiter (20), der sich von der Außenkante des Gehäuses (12) des Außenrückspiegels (10) im wesentlichen horizontal zum Fahrzeug hin erstreckt, und der das an einer zum Fahrzeug hinweisenden Stirnseite in ihn von zumindest einer Lichtquelle (26) eingekoppelte Licht zu seiner gegenüberliegenden Stirnseite leitet und dort gemäß der gesetzlich geforderten Lichtverteilung im wesentlichen entgegen und quer zur Fahrtrichtung (F) des Fahrzeugs auskoppelt und mit zumin-dest einer zweiten Lichtquelle (38), der zumindest ein optisches Bauelement zugeordnet ist, das im wesentlichen der Kontur des Lichtleiters (20) folgend in dem Leuchtengehäuse (18) angeordnet ist,
**dadurch gekennzeichnet, dass** das optische Bauelement als zweiter Lichtleiter (34) ausgebildet ist, der im wesentlichen hinter dem ersten Lichtleiter (20) angeordnet ist und der das in ihn von der zumindest einen zweiten Lichtquelle (38) an einer zum Fahrzeug hinweisenden Stirnseite (36) eingekoppelte Licht mittels Auskoppelelementen (40) im wesentlichen quer zu seiner Längserstreckung auskoppelt, wobei das aus dem zweiten Lichtleiter (34) ausgekoppelte Licht den ersten Lichtleiter (20) durchstrahlt.

2. Fahrzeugleuchte nach Anspruch 1, **dadurch gekennzeichnet, dass** die Auskoppelelemente (40) auf die dem ersten Lichtleiter (20) entgegengesetzte Mantelfläche (42) des zweiten Lichtleiters (34) aufgebrachte Reflexionselemente sind.

3. Fahrzeugleuchte nach Anspruch 1, **dadurch gekennzeichnet, dass** die Auskoppelelemente (40) in die dem ersten Lichtleiter (20) entgegengesetzte Mantelfläche (42) des zweiten Lichtleiters (34) eingebrachte Prismen sind.

4. Fahrzeugleuchte nach einem der vorstehenden Ansprüche, **dadurch gekennzeichnet, dass** die Auskoppelelemente (40) punktförmig oder linienförmig ausgebildet sind.

5. Fahrzeugleuchte nach Anspruch 1, **dadurch gekennzeichnet, dass** die Auskoppelelemente (40) in dem Material des zweiten Lichtleiters (34) enthaltene Streuelemente sind.

6. Fahrzeugleuchte nach einem der vorstehenden Ansprüche, **dadurch gekennzeichnet, dass** die der Mantelfläche (42) des zweiten Lichtleiters (34) zugewandte Gehäusewandung (44) des Leuchtengehäuses (18) verspiegelt ausgebildet ist.

7. Fahrzeugleuchte nach einem der vorstehenden Ansprüche, **dadurch gekennzeichnet, dass** der Lichteinkoppelbereich (22) des ersten Lichtleiters (20) ein optisches Element aufweist, das die Lichtstrahlen (30) der zumindest einen ersten Lichtquelle (26) derart in den ersten Lichtleiter (20) einkoppelt, dass diese in einem ersten Bereich (48) des ersten Lichtleiters (20) vornehmlich nur auf eine Mantelfläche (50) des Lichtleiters auftreffen und diese dadurch derart zu dem Lichtauskoppelbereich (24) des ersten Lichtleiters (20) geleitet werden, dass sie dort gemäß der gesetzlich geforderten Lichtverteilung auskoppeln.

8. Fahrzeugleuchte nach Anspruch 7, **dadurch gekennzeichnet, dass** das optische Element eine Fresnel-Linse (46) ist.

9. Fahrzeugleuchte nach einem der vorstehenden Ansprüche, **dadurch gekennzeichnet, dass** die zumindest eine dem ersten Lichtleiter (20) zugeordnete Lichtquelle (26) und die zumindest eine dem zweiten Lichtleiter (34) zugeordnete Lichtquelle (38) auf einem gemeinsamen Lichtquellenträger (28) in dem Leuchtengehäuse (18) angeordnet sind.

10. Fahrzeugleuchte nach einem der vorstehenden Ansprüche, **dadurch gekennzeichnet, dass** die zumindest eine erste Lichtquelle (26) und die zumindest eine zweite Lichtquelle (38) Licht mit einer unterschiedlichen Farbgebung abgeben und einzeln elektrisch ansteuerbar sind.

11. Fahrzeugleuchte nach einem der vorstehenden Ansprüche, **dadurch gekennzeichnet, dass** die zumindest eine erste Lichtquelle (26) und/oder die zumindest eine zweite Lichtquelle (38) als LED ausgebildet ist.

## Claims

1. Vehicle lamp, more particularly a side-mounted turn-signal lamp to be installed into the housing (12) of an external rear-view mirror (10), incorporating a lamp housing (18), at least one light guide (20) which is arranged in the lamp housing (18), extends substantially horizontally up to the vehicle from the outer edge of the housing (12) of the external rear-view mirror (10), and which guides the light from at least one light source (26) that is input into it on one end face pointing towards the vehicle to its opposing end face, and there in conformity with the legally stipulated light distribution outputs the light in substantially the opposite direction to the vehicle's direction of travel (F) and transversely thereto, and incorporating at least one second light source (38), operatively associated with which is at least one optical component which is arranged in the lamp housing (18) so as to substantially follow the contour of the light guide (20),
**characterised in that** the optical component is configured as a second light guide (34) which is arranged substantially to the rear of the first light guide (20) and which, by means of output elements (40) and substantially transversely to its longitudinal extension, outputs the light being input into it from the at least one second light source (38) on one end (36) face pointing towards the vehicle, with the light output from the second light guide (34) being beamed through the first light guide (20).

2. Vehicle lamp according to claim 1, **characterised in that** the outputting elements (40) are reflecting elements which are mounted on the generated surface (42) of the second light guide (34) and located opposite the first light guide (20).

3. Vehicle lamp according to claim 1, **characterised in that** the outputting elements (40) are prisms which are incorporated into the generated surface (42) of the second light guide (34) and located opposite the first light guide (20).

4. Vehicle lamp according to any one of the preceding claims, **characterised in that** the outputting elements (40) have a punctiform or linear configuration.

5. Vehicle lamp according to claim 1, **characterised in that** the outputting elements (40) are dispersion elements contained in the material of the second light guide (34).

6. Vehicle lamp according to any one of the preceding claims, **characterised in that** the wall (44) of the lamp housing (18) that is directed towards the generated surface (42) of the second light guide (34) has a metallised configuration.

7. Vehicle lamp according to any one of the preceding claims, **characterised in that** the light inputting zone (22) of the first light guide (20) features an optical element which inputs the light rays (30) from the at least one first light source (26) into the first light guide (20) in such a way that in a first zone (48) of the first light guide (20) they preferentially only strike a generated surface (50) of the light guide and this means that they are guided to the light outputting zone (24) of the first light guide (20) in such a way that they are output there in conformity with the legally stipulated light distribution.

8. Vehicle lamp according to claim 7, **characterised in that** the optical element is a Fresnel lens (46).

9. Vehicle lamp according to any one of the preceding claims, **characterised in that** the at least one light source (26) which is operatively associated with the first light guide (20) and the at least one light source (38) which is operatively associated with the second light guide (34) are arranged on a common light source bracket (28) in the lamp housing (18).

10. Vehicle lamp according to any one of the preceding claims, **characterised in that** the at least one first light source (26) and the at least one second light source (38) emit light of different coloration and can individually be activated electronically.

11. Vehicle lamp according to any one of the preceding claims, **characterised in that** the at least one first light source (26) and/or the not at least one second light source (38) is configured as an LED.

## Revendications

1. Feu de véhicule, en particulier feu clignotant latéral destiné à être monté dans le boîtier (12) d'un rétroviseur extérieur (10), comportant un boîtier de feu (18), au moins un guide de lumière (20) agencé dans le boîtier de feu (18), lequel s'étend depuis l'arête extérieure du boîtier (12) du rétroviseur extérieur (10) de manière sensiblement horizontale vers le véhicule, et lequel mène la lumière couplée dans lui-même, provenant d'au moins une source lumineuse (26), sur une face frontale tournée vers le véhicule, vers sa face frontale opposée et la découple à cet endroit selon la répartition de lumière légalement requise sensiblement à l'encontre et transversalement à la direction de roulement (F) du véhicule, et comportant au moins une deuxième source lumineuse (38) à laquelle est associé au moins un composant optique qui est agencé dans le boîtier de feu (18) en suivant sensiblement le contour du guide de lumière (20),
**caractérisé en ce que** le composant optique est réalisé sous forme de deuxième guide de lumière (34) qui est agencé sensiblement derrière le premier guide de lumière (20) et qui découple la lumière couplée dans lui-même en provenance de ladite au moins une deuxième source lumineuse (38) sur une face frontale (36) tournée vers le véhicule au moyen d'éléments de découplage (40) sensiblement transversalement à son extension longitudinale, la lumière découplée hors du deuxième guide de lumière (34) traversant le premier guide de lumière (20).

2. Feu de véhicule selon la revendication 1, **caractérisé en ce que** les éléments de découplage (40) sont des éléments de réflexion appliqués sur la surface enveloppe (42) du deuxième guide de lumière (34), qui est opposée au premier guide de lumière (20).

3. Feu de véhicule selon la revendication 1, **caractérisé en ce que** les éléments de découplage (40) sont des prismes introduits dans la surface enveloppe (42) du deuxième guide de lumière (34), qui est opposée au premier guide de lumière (20).

4. Feu de véhicule selon l'une des revendications précédentes, **caractérisé en ce que** les éléments de découplage (40) sont réalisés en forme de points ou de lignes.

5. Feu de véhicule selon la revendication 1, **caractérisé en ce que** les éléments de découplage (40) sont des éléments de diffusion contenus dans le matériau du deuxième guide de lumière (34).

6. Feu de véhicule selon l'une des revendications précédentes, **caractérisé en ce que** la paroi de boîtier (44) du boîtier de feu (18), tournée vers la surface enveloppe (42) du deuxième guide de lumière (34) est réalisée de manière spécularisée.

7. Feu de véhicule selon l'une des revendications précédentes, **caractérisé en ce que** la région de couplage (22) du premier guide (20) présente un élément optique qui couple les rayons lumineux (30) provenant de ladite au moins une première source lumineuse (26) dans le premier guide de lumière (20) de telle sorte que ceux-ci sont incidents, dans une première région (48) du premier guide de lumière (20), principalement seulement sur une surface enveloppe (50) du guide de lumière et que ceux-ci sont par conséquent guidés vers la région de découplage de lumière (24) du premier guide de lumière (20) de telle sorte qu'ils se découplent à cet endroit selon la répartition de lumière légalement prescrite.

8. Feu de véhicule selon la revendication 7, **caractérisé en ce que** l'élément optique est une lentille de Fresnel (46).

9. Feu de véhicule selon l'une des revendications précédentes, **caractérisé en ce que** ladite au moins une source lumineuse (26) associée au premier guide de lumière (20) et ladite au moins une source lumineuse (38) associée au deuxième guide de lumière (34) sont agencées sur un support de sources lumineuses (28) commun dans le boîtier de feu (18).

10. Feu de véhicule selon l'une des revendications précédentes, **caractérisé en ce que** ladite au moins une première source lumineuse (26) et la dite au moins une deuxième source lumineuse (38) fournissent de la lumière avec une coloration différente et sont individuellement électriquement pilotables.

11. Feu de véhicule selon l'une des revendications précédentes, **caractérisé en ce que** ladite au moins une première source lumineuse (26) et/ou ladite au moins une deuxième source lumineuse (38) sont réalisées sous forme de diode électroluminescentes.
